(19) Europäisches Patentamt
European Patent Office
Office européen des brevets

(11) **EP 2 262 745 B2**

(12) **NOUVEAU FASCICULE DE BREVET EUROPEEN**
Après la procédure d'opposition

(45) Date de publication et mention de la décision concernant l'opposition:
**24.11.2021 Bulletin 2021/47**

(45) Mention de la délivrance du brevet:
**23.01.2019 Bulletin 2019/04**

(21) Numéro de dépôt: 09721848.1

(22) Date de dépôt: **20.03.2009**

(51) Int Cl.:
**C03C 17/36** (2006.01)

(86) Numéro de dépôt international:
**PCT/EP2009/053294**

(87) Numéro de publication internationale:
**WO 2009/115599 (24.09.2009 Gazette 2009/39)**

(54) **VITRAGE REVETU DE COUCHES MINCES**

VERGLASUNG MIT DÜNNSCHICHTBESCHICHTUNG

WINDOW COATED WITH FINE LAYERS

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **20.03.2008 EP 08102820**

(43) Date de publication de la demande:
**22.12.2010 Bulletin 2010/51**

(73) Titulaire: **AGC Glass Europe**
**1348 Louvain-la-Neuve (BE)**

(72) Inventeur: **DI STEFANO, Gaëtan**
**B-6040 Jumet (BE)**

(74) Mandataire: **AGC Glass Europe**
**Technovation Centre**
**Intellectual Property Department**
**Rue Louis Blériot 12**
**6041 Gosselies (BE)**

(56) Documents cités:
**EP-A- 0 922 681       WO-A-2004/071984**
**WO-A-2006/048462    US-A1- 2006 046 089**

**Description**

La présente invention concerne des vitrages comprenant un ensemble de couches minces conférant des propriétés antisolaires ou bas-émissives, susceptibles de supporter des traitements thermiques de type bombage/trempe. Ces vitrages présentent, avant et après ce traitement thermique, des propriétés optiques (transmission, réflexion, couleur) suffisamment voisines pour permettre l'utilisation simultanée dans un même ensemble comprenant des pièces non-soumises au traitement thermique et d'autres ayant subi ce traitement, sans que les différences qui peuvent en résulter soient trop manifestes. Des vitrages de ce type sont communément désignés comme "matchable" ou "self-matchable".

Les revêtements les plus usuels pour les vitrages en question, sont réalisés par des techniques de dépôt sous vide assisté par magnétron, et comprennent systématiquement une ou plusieurs couches réfléchissant les infrarouges très généralement à base d'argent métallique. Pour préserver la qualité de ces couches métalliques, notamment pour les protéger contre les altérations mécaniques et surtout chimiques, mais aussi pour faire en sorte que la réflexion opère sélectivement sur les infrarouges, laissant passer le plus possible des longueurs d'onde du visible, la ou les couches à base d'argent sont incluses dans des ensembles de couches diélectriques.

Les vitrages anti-solaires ou bas-émissifs peuvent atteindre des performances remarquables tant dans les caractéristiques thermiques que dans les aspects optiques. Ils peuvent présenter notamment une très grande sélectivité, autrement dit constituer de puissants filtres pour les rayons infrarouges, tout en laissant passer les longueurs d'ondes visibles. Ils peuvent, dans les meilleures conditions, offrir une parfaite neutralité de couleur notamment en réflexion, évitant les colorations non-souhaitées.

Des vitrages revêtus de couches anti-solaires ou bas-émissives qui peuvent subir des traitements thermiques du type bombage/trempe sans que leurs propriétés soient significativement altérées, sont connus (voir par exemple US2006/0046089, WO2006/048462 et EP0922681). Ils comportent des systèmes de couches qui protègent les couches métalliques, notamment contre l'oxydation. Ces systèmes comprennent typiquement plusieurs types de couches contribuant à cette protection.

Il s'agit notamment des couches disposées au-dessus de toutes les autres et qui les recouvrent. Ces couches ont un rôle protecteur contre toutes les agressions extérieures, humidité, oxydation etc. Elles doivent être aussi résistantes aux épreuves mécaniques, usure, rayure...Des couches de ce type sont principalement des couches de nitrures ou oxynitrures tels que $Si_3N_4$, TiN, SiAlxOyNz, TiNwOv.

Il s'agit aussi des couches qui sont au contact immédiat des couches à base d'argent, couches dites "barrière". Ces couches doivent protéger l'argent contre l'altération qui peut provenir du contact avec des couches voisines ou des constituants des couches susceptibles de migrer notamment dans les conditions des traitements thermiques considérés. Ces couches sont particulièrement utiles dans les systèmes de couches diélectriques constituées d'oxydes métalliques.

D'autres couches peuvent encore influer sur le caractère "matchable", dès lors qu'elles voient leurs caractéristiques modifiées par une exposition à des températures élevées.

Un but de l'invention est de proposer des vitrages revêtus de systèmes de couches tels, que soumis ou non à un traitement thermique dans les conditions du type de celles correspondant à une opération de bombage/trempe, ils puissent être utilisés conjointement, les différences des propriétés optiques de ces vitrages restant suffisamment limitées.

Dans la pratique il est admis comme critère quantifié du caractère "matchable", que la différence des propriétés optiques des produits sans traitement thermique et après ce traitement satisfait à la condition :

$$\Delta E = [(\Delta L^*)^2 + (\Delta a^*)^2 + (\Delta b^*)^2]^{1/2} \leq 2$$

et de préférence :

$$\Delta E \leq 1$$

Dans ces expressions L*, a* et b* sont les coordonnées colorimétriques exprimées dans le système CIELAB (illuminant D, sous 10°).

Cette caractéristique concerne principalement la lumière visible réfléchie par les vitrages vers l'extérieur. L'appréciation des différences de couleurs est particulièrement sensible pour ce type de réflexion, les bâtiments devant présenter une apparence uniforme sur l'ensemble de leurs vitrages. A un degré moindre, il est avantageux que la même condition soit remplie pour ce qui concerne la réflexion vers l'intérieur, bien qu'il soit beaucoup moins fréquent d'avoir simultanément la vision de plusieurs vitrages les uns traités thermiquement les autres non-traités. Enfin il est préférable encore de faire en sorte que cette condition soit aussi remplie pour ce qui concerne la lumière transmise par ces vitrages.

Le traitement thermique auquel les vitrages sont éventuellement soumis, traitement du type bombage ou trempe, conduit à des températures de l'ordre de 500 à 700°C et ceci pendant plusieurs minutes. Pour la commodité des comparaisons, un traitement à 550°C pendant 5 minutes est pris comme référence.

Au-delà des qualités optiques recherchées, les vitrages en question doivent présenter encore une résistance suffisante aux diverses agressions auxquelles ils sont susceptibles d'être exposés. Il s'agit notamment des agressions chimiques : air, eau, brouillards salins..., mais aussi mécaniques rencontrées au cours des transports ou transformations lors de leur mise en oeuvre.

Les couches les plus externes de ces systèmes de couches, doivent notamment conférer à ces systèmes les propriétés de résistance chimique et mécanique, bien entendu en n'altérant pas les autres propriétés. A titre indicatif, des couches pourtant réputées pour leur résistance mécanique, notamment certains carbures comme ceux de titane ou de zirconium sont trop absorbants pour pouvoir être utilisés même sous de très faibles épaisseurs.

Différentes propositions antérieures ont répondu au moins partiellement aux exigences attachées à ces couches superficielles dites aussi "top-coat". Parmi les couches les plus utilisées figurent notamment les couches d'oxyde de titane, celles d'oxyde d'étain, celles de silice, des nitrures et notamment ceux de silicium. A l'expérience les couches d'oxyde de titane ou d'oxyde d'étain sont trop sensibles au traitement thermique. Les nitrures de titane, les oxy-nitrures de zirconium notamment, supportent bien les traitements thermiques, néanmoins ces couches présentent des variations sensibles de transmission lumineuse avant et après traitement, et donc ne permettent pas d'obtenir des vitrages "matchables".

Des couches superficielles ont été proposées pour des vitrages "matchables". Il s'agit notamment de la silice et des nitrures de silicium. Le dépôt de silice est très délicat, et les couches de nitrures de silicium ne présentent qu'une résistance insuffisante aux rayures.

L'invention propose des vitrages anti-solaires ou bas émissifs revêtus de systèmes de couches qui leur confèrent la qualité de vitrages "matchables".

A cet effet l'invention propose d'utiliser des vitrages revêtus de systèmes de couches comprenant en couche superficielle une couche à base d'oxyde de titane et d'au moins un autre oxyde métallique de dureté élevée du groupe comprenant : $ZrO_2$, $SiO_2$, $Cr_2O_3$.

Les proportions respectives d'oxyde de titane et des autres métaux peuvent recouvrir une grande gamme de mélanges. Pour que l'effet soit sensible le ou les oxydes additionnels doivent représenter au moins 5% en poids de l'ensemble et de préférence au moins 10% en poids.

Dans l'oxyde mixte, l'oxyde de titane est présent au moins à 40% en poids, et de préférence au moins à 50% en poids.

De manière particulièrement préférée l'oxyde de titane représente au moins 55% en poids.

Dans les oxydes mixtes utilisés selon l'invention, en plus de l'oxyde de titane, l'oxyde de zirconium est particulièrement préféré. Il est avantageusement à raison de 15 à 50% en poids de la couche superficielle.

En dehors des oxydes de titane et des métaux énumérés ci-dessus, la couche superficielle selon l'invention peut encore contenir des oxydes supplémentaires pratiquement indissociables des oxydes précédents. C'est le cas en particulier des lanthanides comme l'oxyde d'yttrium ou celui de hafnium. Lorsque ces oxydes additionnels sont présents, leur teneur reste relativement limitée et ne dépasse pas 5% en poids de l'ensemble.

La couche superficielle pour jouer convenablement son rôle doit présenter une certaine épaisseur, mais une épaisseur relativement modeste peut suffire. De préférence l'épaisseur de cette couche n'est pas inférieure à 3nm.

Compte tenu de ce que les oxydes qui entrent dans la composition de cette couche superficielle sont bien transparents, il est possible d'utiliser des couches beaucoup plus épaisses que ne le nécessiterait l'amélioration de la résistance au traitement thermique. Il est possible notamment d'utiliser cette couche de protection comme élément du filtre interférentiel, autrement dit comme couche participant de façon significative au maintient d'une transmission visible élevée et à l'établissement d'une bonne neutralité en réflexion.

La couche superficielle utilisée comme élément du filtre interférentiel est avantageusement combinée à d'autres couches diélectriques. Le choix de l'ensemble tient compte alors non seulement des propriétés optiques ou structurelles des différentes couches (indice, transparence, structure cristalline, qualité des interfaces) mais aussi de la commodité relative de la formation de ces couches.

Quelle que soit la structure considérée, en pratique la couche superficielle utilisée selon l'invention reste d'épaisseur au plus égale à 35nm.

Les couches superficielles selon l'invention sont peu ou pas sensibles aux traitements thermiques de bombage ou de trempe. Soumises à une température d'au moins 550°C pendant 5mn et pour une épaisseur de 20nm, leur transmission lumineuse ne varie pas de plus de 0,1%.

Par ailleurs les vitrages revêtus selon l'invention présente avantageusement une résistance aux rayures selon la méthode faisant l'objet de la norme ASTM 2486D, qui n'est pas supérieure à 20%.

Les vitrages revêtus selon l'invention offrent encore une très bonne résistance aux tests d'humidité. Soumis au test "Cleveland" selon la norme ISO 6270, et pendant 3 jours, le niveau atteint est avantageusement d'au moins 3. Pour les échantillons soumis au test de pulvérisation saline selon la norme EN 1096, le résultat est avantageusement supérieur à 3 après 2 jours d'exposition.

Pour avoir des systèmes de couches conduisant à des vitrages "matchables", il faut que pratiquement toutes les couches soient insensibles aux conditions auxquelles le vitrage est soumis.

Parmi les couches utilisées, certaines sont plus particulièrement susceptibles d'être modifiées. Il s'agit par exemple de couches qui par nature peuvent se transformer sous l'effet de la température, et notamment de couches dont la structure cristallographique peut être modifiée. Il est connu par exemple de la demande de brevet européen publiée EP 1980 539 au nom de la demanderesse, d'utiliser des couches diélectriques à base d'oxyde de titane comportant un oxyde étranger qui s'oppose aux changements cristallographiques de l'oxyde en question, lorsqu'il est soumis aux températures de bombage ou de trempe.

Il s'agit aussi des couches dont la transformation provient d'une altération chimique due soit aux réactions des constituants des couches entre elles, soit à la réaction avec les composants de l'atmosphère dans le traitement thermique considéré. Ces couches sont celles qui sont notamment susceptibles de réagir par oxydation.

Parmi ces couches figurent notamment celles qui sont spécialement réactives à l'oxygène. Les couches dites "sacrificielles" ou "barrières" correspondent bien à ces caractéristiques.

Les couches barrières les plus usuelles proposées antérieurement pour les vitrages "matchables" sont notamment des couches d'oxyde d'alliage de nickel et de chrome. Mais ces couches relativement faciles à déposer n'offrent pas les meilleures caractéristiques. Elles sont relativement moins transparentes que d'autres couches comme celles à base d'oxyde de titane.

La constitution des couches barrière doit en effet satisfaire à un ensemble de conditions a priori difficilement compatibles. Partant de l'idée qu'elles doivent fixer, ou être à même de fixer facilement l'oxygène, ces couches sont habituellement constituées de telle sorte qu'elles présentent un déficit en oxygène par rapport aux compositions strictement stoechiométriques. S'agissant des couches barrières une difficulté vient de ce qu'elles sont déposées directement sur une couche d'argent, et que les conditions de leur dépôt doivent être parfaitement maîtrisées pour prévenir toute altération de la couche d'argent.

Pour cette raison le dépôt dans une atmosphère non oxydante semble a priori préférable. Les inventeurs ont montré cependant que le choix du dépôt dans ces conditions d'une couche barrière d'oxyde n'est pas entièrement satisfaisant dans la production de produits "matchables". Les couches d'oxyde déposées en atmosphère non oxydante conduisent en effet à des produits systématiquement sous-oxydés lesquels, lorsqu'ils sont soumis à un traitement thermique, conduisent à une oxydation complémentaire significative et par suite à une modification sensible des propriétés de la couche barrière concernée. Ces modifications peuvent occasionner des changements plus ou moins importants des caractéristiques opto-énergétiques des vitrages.

Lorsque le dépôt de la couche barrière s'effectue à partir de cibles métalliques, la présence d'oxygène dans l'atmosphère lors du dépôt est nécessaire. Faute d'oxygène la barrière serait très largement sous-oxydée et présenterait une sensibilité extrême aux traitements thermiques ultérieurs.

La pratique consistant à former les couches barrières d'oxyde à partir de cibles oxydées, cibles dites "céramiques", conduit à une couche barrière d'oxyde même en atmosphère non-oxydante. Néanmoins l'oxydation de la couche n'est pas complète. Pour cette raison l'altération ultérieure de cette barrière lors du traitement thermique demeure possible. Il est donc préférable selon l'invention, pour atteindre un degré d'oxydation proche de la stoechiométrie de procéder en atmosphère oxydante même dans les dépôts à partir de cibles céramiques.

Selon l'invention on utilise avantageusement des couches barrière à base d'oxyde de titane. Ces couches sont avantageusement des couches mixtes d'oxyde de titane dopé au moyen d'oxyde de l'un des métaux comprenant le zirconium, le niobium, le tantale.

Les conditions de dépôt des couches superficielles sont en principe moins contraignantes dans la mesure où le choix d'une atmosphère oxydante pour un dépôt à partir de cibles métalliques risque moins de conduire à une altération des couches d'argent qui sont précédemment recouvertes d'autres couches diélectriques. Par ailleurs l'utilisation de cibles céramiques conduisant généralement à une grande stabilité du processus de dépôt, particulièrement pour certains constituants comme le titane, ces cibles céramiques sont généralement préférées aux cibles métalliques.

Plus encore que pour les couches barrières, l'oxydation complète des couches superficielles est nécessaire. Ces couches étant directement exposées lors des traitements thermiques, elles sont soumises à des conditions fortement oxydantes. Pour qu'elles ne subissent pas de modifications sensibles au cours de tels traitements, il est donc nécessaire de procéder dès l'origine à la formation de couches sensiblement complètement oxydées.

Pour préserver une bonne structure des couches à base d'argent, il est nécessaire selon l'invention de les déposer sur une couche qui favorise une bonne régularité de croissance. Des couches répondant à cette caractéristique sont des couches à base d'oxyde de zinc, et notamment des couches d'oxyde de zinc dopé à l'étain.

Les systèmes selon l'invention comprennent une, deux ou trois couches d'argent chacune d'une épaisseur de 7 à 20nm.

L'invention est décrite de façon détaillée dans les exemples suivants qui font également l'objet des figures annexées dans lesquelles :

- la figure 1 est une représentation schématique d'une coupe d'un vitrage revêtu d'un système de couches selon l'invention ;
- la figure 2 illustre un autre système de couches selon l'invention ;
- la figure 3 illustre encore un autre système de couches selon l'invention.

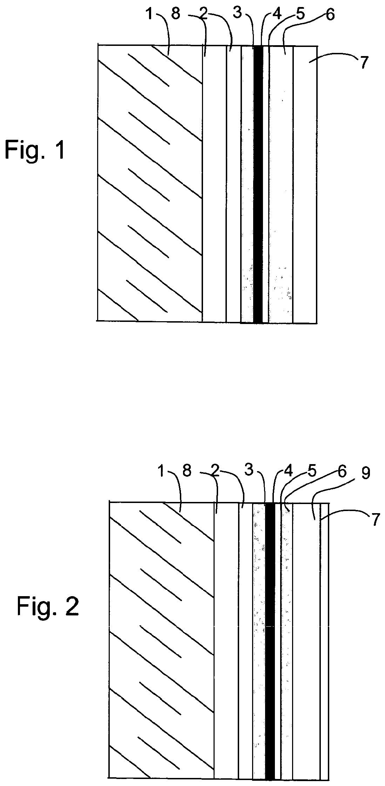

Le vitrage à la figure 1 est présenté en coupe sans respecter les proportions des différents éléments par souci de clarté. La feuille de verre 1 est revêtue d'un ensemble de couches comprenant une couche 4 à base d'argent réfléchissant les infrarouges. Cette couche d'argent est disposée entre deux ensembles de couches diélectriques qui la protègent et lui confèrent une bonne transmission lumineuse avec une neutralité en réflexion.

La couche d'argent 4 est déposée sur une couche 3 à base d'oxyde de zinc. Les couches d'oxyde de zinc, et celles à base d'oxyde de zinc dopé, sont connues pour favoriser la formation d'une bonne interface avec les couches d'argent, et améliorent globalement les propriétés de ces dernières. Pour une même quantité d'argent par unité de surface la conduction, et par suite l'émissivité des couches sont améliorées lorsqu'elles sont déposées de cette façon. Il peut s'agir d'oxyde de zinc seul sous faible épaisseur, épaisseur qui n'est pas supérieure à 15nm. La présence de cette couche conduit à une interface bien régulière sans rugosité. Par suite, pour une quantité d'argent déterminée, la couche offre une conductivité élevée.

Lorsque l'épaisseur d'oxyde de zinc est plus importante, le risque est de développer une croissance colonnaire laquelle conduit à une interface moins régulière avec une rugosité accrue. Pour éviter ce type de croissance il est connu de doper l'oxyde de zinc avec d'autres oxydes notamment de l'oxyde d'étain ou d'aluminium.

Les couches constituées d'oxyde mixte zinc et étain sont traditionnellement de deux types. Les couches sur lesquelles les couches d'argent sont déposées sont avantageusement à faible teneur en oxyde d'étain, notamment de l'ordre de 10% en poids. Ces couches comme indiqué précédemment sont relativement peu épaisses et ne dépassent pas 15nm. Le second type de couches d'oxyde mixte de zinc et d'étain est utilisé pour constituer dans les ensembles diélectriques, la part principale du chemin optique pour les effets dé-réfléchissants. Dans cette fonction la, ou les couches en question, ont d'ordinaire des épaisseurs de plusieurs dizaines de nanomètres. De façon typique, des couches de ce type sont constituées à partir d'un oxyde mixte à 50% en poids environ de chacun des oxydes de zinc et d'étain. Ces couches présentent l'avantage d'une grande stabilité en particulier lors des traitements thermiques auxquels peuvent être soumis les vitrages.

Dans l'exemple représenté à la figure 1, une couche protectrice 5 est déposée au dessus de la couche d'argent 4. Il s'agit d'une couche traditionnelle qui a pour but de protéger la couche d'argent contre les altérations qui pourraient l'affecter notamment au cours des dépôts ultérieurs, en particulier lorsque ces dépôts sont réalisés selon un mode réactif par exemple en atmosphère oxydante. La couche 5 est dite barrière ou encore sacrificielle. Elle intervient en réagissant avec l'atmosphère de dépôt des couches ultérieures qui en l'absence de cette couche serait susceptible de réagir avec la couche d'argent. Ces couches sacrificielles sont de très faibles épaisseurs. Elles ne sont pas de plus de 6nm et de préférence leur épaisseur est de 2 ou 3nm. Elles sont constituées traditionnellement à base d'oxyde notamment de titane ou d'oxyde mixte de NiCr, l'oxyde de titane offrant l'avantage d'une très grande transparence aux longueurs d'onde du visible. Etant déposée pour pouvoir réagir en protégeant l'argent, elles sont souvent formées à partir des métaux correspondant, et oxydées dans la suite de la constitution de l'empilage. Pour cette raison les couches sont souvent sous-stoechiométriques. Il est nécessaire de les déposer à partir de cibles céramiques elles mêmes sous-stoechiométriques. Cette façon de procéder permet d'atteindre plus commodément une bonne oxydation voisine de la stoechiométrie dans la couche finale. De cette manière le coefficient d'extinction de la couche est très peu élevé.

A la figure 1 les couches 2, 6 et 8, sont des couches entrant dans la constitution du filtre infrarouge. Elles permettent d'éviter la réflexion de la majeure partie des rayons du domaine du visible. Grâce à ces couches on règle aussi la coloration de la lumière transmise et surtout de celle réfléchie, étant connu que dans la grande majorité des applications l'on s'efforce pour cette dernière de faire en sorte que cette lumière soit aussi faible et aussi neutre que possible.

Les couches diélectriques traditionnelles sont principalement constituées des oxydes de : Zn, Sn, Ti, Al, Zr, Nb. Leur épaisseur est fonction du chemin optique nécessaire, lequel dépend de l'épaisseur de la couche réfléchissant les infrarouges. Les relations entre ces grandeurs (épaisseurs, indices) sont parfaitement établies par des relations physiques connues. La détermination des épaisseurs fait l'objet de simulations au moyen de programmes largement répandus. Partant des valeurs ainsi déterminées, les ajustements ultérieurs sont effectués pour tenir compte des écarts qui peuvent exister entre les caractéristiques effectives de structure, de composition ou de configuration effectives, et celles correspondantes des couches idéales.

La couche superficielle 7 est une couche selon l'invention à base d'oxyde de titane comprenant un oxyde conférant une résistance particulièrement efficace ($ZrO_2$ , $SiO_2$ , $Cr_2O_3$ ).

Un empilage (I) de ce type conforme à l'invention est constitué partant du verre par les couches suivantes :

| couche | 8 | 2 | 3 | 4 | 5 | 6 | 7 |
|---|---|---|---|---|---|---|---|
| | ZS09 | TiZrOx | AZO | Ag | TiOx | ZSO9 | TiZrOx |
| I | 180 | 100 | 60 | 120mg/m$^2$ | 20 | 210 | 160 |

Dans ce tableau :

- ZSO9 désigne une couche d'oxyde de zinc dopée à 10 en poids d'oxyde d'étain ;

- TiOx est un oxyde de titane sous-oxydé ;

- TiZrOx est un oxyde de titane mixte comprenant en poids 50% de TiO$_2$, 46% de ZrO$_2$, le reste étant constitué d'éléments accompagnant habituellement le zirconium, notamment de l'oxyde Y$_2$O$_5$ ;

- les épaisseurs sont exprimées en Angströms.

Le dépôt des couches est réalisé sur une feuille de verre clair de 4mm d'épaisseur.

Les échantillons constitués sont répartis en deux lots. Le premier est conservé tel quel. Le second est soumis à un traitement à 550°C dans un four pendant 5 minutes. Les propriétés de ces lots d'échantillons sont comparées. Il s'agit de la transmission visible, Tv, de la réflexion coté verre, Rv, de la réflexion coté couche, Ri, et de l'émissivité normale En.

| | sans traitement | après traitement | différence |
|---|---|---|---|
| Tv | 78,21 | 79,01 | 0,8 |
| Rv | 11,53 | 11,57 | 0,04 |
| Ri | 11,88 | 11,95 | 0,07 |
| En | 0,047 | 0,047 | 0 |

Les différences sont très faibles. La plus importante est celle concernant la transmission visible, mais elle demeure de moins de 1%. Cette différence n'est pas perceptible à l'observation.

Le verre est assemblé en un vitrage isolant. La feuille revêtue est associée à une feuille de 4mm ne comportant pas de couches. L'espace entre les deux feuilles de verre est de 16mm. Dans l'assemblage, les couches sont tournées vers l'espace entre les feuilles. Les variations de couleurs entre les deux séries d'échantillons sont mesurées. Les couleurs sont notées selon le système CIELAB. La détermination concerne la lumière transmise, T, et celle réfléchie vers l'intérieur, Ri, ou vers l'extérieur, Re. Le système de couches est en position 3 en partant de la face tournée vers la lumière incidente extérieure.

| | sans traitement | | | après traitement | | | ΔE |
|---|---|---|---|---|---|---|---|
| | L* | a* | b* | L* | a* | b* | |
| T | 90,83 | -3,05 | 2,77 | 91,16 | -2,77 | 3,26 | 0,98 |
| Re | 40,62 | 0,63 | -4,45 | 40,68 | 0,27 | -4,41 | 0,37 |
| Ri | 41,26 | -0,06 | -6,8 | 41,39 | -0,28 | -7,17 | 0,45 |

Les mesures colorimétriques montrent pour toutes les catégories, transmises ou réfléchies, des variations qui restent toutes inférieures à 1. En particulier les réflexions qui sont les plus sensibles, notamment celles dirigées vers l'extérieur, sont très peu modifiées. Les vitrages apparaissent comme pratiquement identiques.

Plusieurs autres assemblages comparatifs de couches notés respectivement cII, cIII et cIV dans les tableaux suivants, sont réalisés hors invention, comportant tous une couche superficielle à base d'oxyde de titane mixte, avec du zirconium ou du niobium. Par ailleurs les conditions de dépôt de la couche superficielle, mais aussi de certaines des couches sacrificielles, diffèrent suivant les exemples. Certaines de ces couches sont déposées en atmosphère entièrement neutre (Ar), d'autres dans une atmosphère constituée d'un mélange d'argon avec une faible proportion d'oxygène

(ArO$_2$, à 5% de O$_2$).

Les assemblages de couches sont tels que représentés à la figure 2. Dans tous les exemples la première couche (8) au contact de la feuille de verre est une couche d'oxyde mixte de zinc et d'étain à 50% en poids de chacun des constituants (ZSO5).

La seconde couche (2) est d'oxyde mixte à base d'oxyde de titane et de zirconium (TiZrOx) ou de niobium (TiNbOx). La proportion d'oxyde de zirconium ou de niobium est comme précédemment de 46% en poids, celle d'oxyde de titane de 50%. Dans les exemples cIII et cIV, cette couche est déposée en atmosphère contenant de l'oxygène alors que pour l'exemple 2, l'atmosphère est de l'argon seul.

Dans l'exemple cIII la couche 2 est directement au contact de la couche d'argent. Dans les exemples cII et cIV une couche intercalaire (3) destinée à favoriser la croissance régulière de la couche d'argent est interposée. Dans l'exemple cII il s'agit d'une couche d'oxyde de zinc dopée à 10% d'oxyde d'étain (ZSO9). Pour l'exemple cIV cette couche (ZnO-Al) est d'oxyde de zinc dopée à l'aluminium (4% en poids).

La couche d'argent (4) dans les trois exemples est de 120mg/m$^2$.

La couche barrière (5), est respectivement d'oxyde mixte de titane zirconium (TiZrOx) pour l'exemple cII, d'oxyde mixte de titane et de niobium (TiNbOx) pour l'exemple cIII, et d'oxyde de titane sous-oxydé seul (TiOx) pour l'exemple cIV. Toutes les couches barrière (5) sont déposées en atmosphère d'argon.

Dans les exemples cII et cIV une couche d'oxyde de zinc dopée à 10% d'oxyde d'étain (6) est superposée à la couche barrière (5).

La couche diélectrique la plus épaisse (9) est constituée d'oxyde mixte de zinc et d'étain à 50% en poids (ZSO5) pour les trois exemples.

La couche superficielle (7) est de même nature que la couche (2), TiZrOx ou TiNbOx, et est déposée dans les mêmes conditions d'atmosphère (argon seul ou argon avec 5% d'oxygène).

Les épaisseurs des couches sont reportées dans le tableau suivant. Les épaisseurs sont données en Angströms.

| | 8 | 2 | 3 | 4 | 5 | 6 | 9 | 7 |
|---|---|---|---|---|---|---|---|---|
| | ZSO5 | TiZrOx (Ar) | ZSO9 ZnO-Al | Ag mg/m$^2$ | TiZrOx (Ar) | ZSO9 | ZSO5 | TiZrOx (Ar) |
| | | TiNbOx (ArO$_2$) | | | TiNbOx (Ar) | | | TiNbOx (ArO$_2$) |
| | | TiZrOx (ArO$_2$) | | | TiOx(Ar) | | | TiZrOx (ArO$_2$) |
| cII | 180 | 100 | 80 | 120 | 50 | 80 | 235 | 60 |
| cIII | 250 | 80 | - | 120 | 50 | - | 300 | 60 |
| cIV | 180 | 100 | 80 | 120 | 50 | 80 | 200 | 100 |

Les mesures des propriétés de ces trois exemples comparatifs sont données comme précédemment en comparant les valeurs sans traitement thermique et après ce traitement. Les mesures sont faites pour un vitrage isolant comportant comme précédemment une feuille de verre de 4mm espacée de 16mm de la feuille portant le système de couches. Les couches sont sur la face en position 3 en comptant depuis l'extérieur du vitrage.

| cII | sans traitement | après traitement | différence |
|---|---|---|---|
| Tv | 76,9 | 78,6 | 1,7 |
| Re | 11,6 | 11,8 | 0,2 |
| Ri | 11,3 | 11,6 | 0,3 |
| En | 0,062 | 0,044 | -0,018 |

| cII | sans traitement | | | après traitement | | | ΔE |
|---|---|---|---|---|---|---|---|
| | L* | a* | b* | L* | a* | b* | |
| T | 90,2 | -3,7 | 3,8 | 91,0 | -2,7 | 2,7 | 1,7 |
| Re | 40,7 | -1,6 | -4,9 | 41,1 | -0,5 | -7,1 | 2,5 |
| Ri | 40,3 | 0,5 | -5,6 | 40,8 | 0,4 | -5,6 | 0,5 |

| cIII | sans traitement | après traitement | différence |
|------|-----------------|------------------|------------|
| Tv | 75,0 | 75,2 | 0,2 |
| Re | 12,9 | 13,3 | 0,4 |
| Ri | 11,8 | 12,1 | 0,3 |
| En | 0,08 | 0,055 | -0,025 |

| cIII | sans traitement | | | après traitement | | | ΔE |
|------|------|------|------|------|------|------|------|
| | L* | a* | b* | L* | a* | b* | |
| T | 89,3 | -2,7 | 2,5 | 89,4 | -1,0 | 3,4 | 1,9 |
| Re | 42,9 | -2,5 | -8,2 | 43,5 | -3,2 | -8,3 | 0,8 |
| Ri | 41,1 | -1,2 | -6,9 | 41,7 | -1,7 | -7,17 | 1,3 |

| cIV | sans traitement | après traitement | différence |
|------|-----------------|------------------|------------|
| Tv | 78,2 | 79,0 | 0,8 |
| Re | 11,5 | 11,6 | 0,1 |
| Ri | 11,9 | 12,0 | 0,1 |
| En | 0,047 | 0,047 | 0 |

| cIV | sans traitement | | | après traitement | | | ΔE |
|------|------|------|------|------|------|------|------|
| | L* | a* | b* | L* | a* | b* | |
| T | 90,8 | -3,1 | 2,8 | 91,2 | -2,3 | 3,3 | 1,0 |
| Re | 40,6 | 0,6 | -4,5 | 40,7 | 0,3 | -4,4 | 0,4 |
| Ri | 41,3 | -0,1 | -6,8 | 41,4 | -0,3 | -7,2 | 0,4 |

Les essais montrent une grande stabilité des propriétés optiques des systèmes qui ne comportent pas de couches superficielles sous-oxydées, c'est à dire les couches 7 déposées dans une atmosphère oxydante. Les systèmes cIII et cIV répondent tous les deux à cette condition. A l'inverse, l'exemple cII qui comporte une couche superficielle déposée dans une atmosphère non oxydante est sensible à l'épreuve au traitement thermique. Cet exemple est d'autant plus sensible qu'il comporte en plus une couche barrière 2, qui est également déposée en atmosphère non oxydante, et qui est susceptible de se modifier lors du traitement thermique.

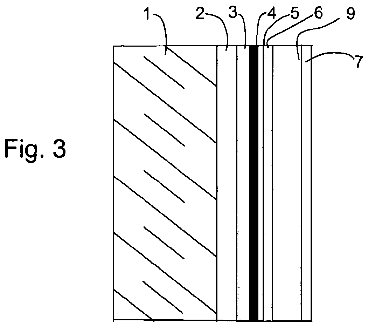

Aux essais précédents conduits sur des installations de dépôt pilotes, ont succédés des essais sur lignes industrielles pour vérifier la stabilité des résultats obtenus précédemment. Dans tous ces essais comparatifs, le système de couches représenté schématiquement à la figure 3 est le suivant :

| 2 | 3 | 4 | 5 | 6 | 9 | 7 |
|------|------|------|------|------|------|------|
| ZSO5 | ZSO9 | Ag | ZnO-Al | ZSO9 | ZSO5 | TiZrOx |
| 250 | 100 | 120mg/m$^2$ | | 100 | 250 | |

Six séries de produits comparatifs référencées cV à cX, sont réalisés dont les seules différences concernent l'épaisseur de la couche barrière 5 et celle de la couche superficielle 7. Les épaisseurs en question sont en Angström :

|  | cV | cVI | cVII | cVIII | cIX | cX |
|---|---|---|---|---|---|---|
| ZnO-Al | 30 | 15 | 60 | 23 | 94 | 23 |
| TiZrOx | 63 | 63 | 63 | 35 | 35 | 17,5 |

Elles conduisent comme précédemment dans les vitrages isolants constitués aux résultats suivants :

| cV | sans traitement | après traitement | différence |
|---|---|---|---|
| Tv | 79,3 | 80,5 | -1,2 |
| Re | 12,5 | 12,7 | 0,2 |
| Ri | 12,9 | 12,9 | 0 |
| TIR | 0,076 | 0,057 | 0,019 |
| R Ω/□ | 6,73 | 4,44 | 2,29 |

| cV | sans traitement | | | après traitement | | | ΔE |
|---|---|---|---|---|---|---|---|
|  | L* | a* | b* | L* | a* | b* | |
| T | 91,3 | -1,7 | 2,7 | 91,9 | -1,5 | 2,6 | 0,6 |
| Re | 42,1 | -2,6 | -4,5 | 42,6 | -2,5 | -5,4 | 1,0 |
| Ri | 42,8 | -3,4 | -5,7 | 42,9 | -3,0 | -6,5 | 0,9 |

| cVI | sans traitement | après traitement | différence |
|---|---|---|---|
| Tv | 79,4 | 80,3 | -0,9 |
| Re | 12,2 | 12,6 | -0,4 |
| Ri | 12,4 | 12,6 | -0,2 |
| TIR | 0,07 | 0,054 | 0,016 |
| R Ω/□ | 5,52 | 5,43 | 0,09 |

| cVI | sans traitement | | | après traitement | | | ΔE |
|---|---|---|---|---|---|---|---|
|  | L* | a* | b* | L* | a* | b* | |
| T | 91,4 | -1,9 | 2,6 | 91,8 | -1,5 | 2,7 | 0,6 |
| Re | 41,7 | -2,2 | -4,7 | 42,3 | -2,4 | -5,4 | 0,9 |
| Ri | 42,1 | -3,0 | -6,2 | 42,5 | -2,6 | -6,9 | 0,9 |

| cVII | sans traitement | après traitement | différence |
|---|---|---|---|
| Tv | 78,7 | 77,5 | 1,2 |
| Re | 12,7 | 12,8 | -0,1 |
| Ri | 13,4 | 13,8 | -0,4 |
| TIR | 0,071 | 0,065 | 0,006 |

(suite)

| cVII | sans traitement | après traitement | différence |
|---|---|---|---|
| R Ω/□ | 5,63 | 5,4 | 0,23 |

| cVII | sans traitement | | | après traitement | | | ΔE |
|---|---|---|---|---|---|---|---|
| | L* | a* | b* | L* | a* | b* | |
| T | 91,0 | -2,1 | 3,4 | 90,5 | -1,1 | 3,1 | 1,1 |
| Re | 42,6 | -2,1 | -6,9 | 42,7 | -2,2 | -6,4 | 0,5 |
| Ri | 43,6 | -3,0 | -7,4 | 44,2 | -3,2 | -7,9 | 0,8 |

| cVIII | sans traitement | après traitement | différence |
|---|---|---|---|
| Tv | 79,3 | 80,4 | -1,1 |
| Re | 12,4 | 12,6 | -0,2 |
| Ri | 12,8 | 13,0 | -0,2 |
| TIR | 0,064 | 0,055 | 0,009 |
| R Ω/□ | 5,11 | 4,33 | 0,78 |

| cVIII | sans traitement | | | après traitement | | | ΔE |
|---|---|---|---|---|---|---|---|
| | L* | a* | b* | L* | a* | b* | |
| T | 91,3 | -2,1 | 3,2 | 91,8 | -1,7 | 3, 1 | 0,7 |
| Re | 42,1 | -2,0 | -6,0 | 42,3 | -2,1 | -6,4 | 0,5 |
| Ri | 42,8 | -2,8 | -7,0 | 43,1 | -2,7 | -7,4 | 0,5 |

| cIX | sans traitement | après traitement | différence |
|---|---|---|---|
| Tv | 76,8 | 76,5 | 0,3 |
| Re | 14,6 | 14,7 | -0,1 |
| Ri | 15,8 | 16,0 | -0,2 |
| TIR | 0,067 | 0,068 | -0,001 |
| R Ω/□ | 5,64 | 5,6 | 0,04 |

| cIX | sans traitement | | | après traitement | | | ΔE |
|---|---|---|---|---|---|---|---|
| | L* | a* | b* | L* | a* | b* | |
| T | 90,1 | -1,9 | 4,4 | 90,0 | -1,0 | 3,8 | 1,0 |
| Re | 45,3 | -2,6 | -8,6 | 45,4 | -3,0 | -7,0 | 1,7 |
| Ri | 47,0 | -3,6 | -7,6 | 47,3 | -3,8 | -7,3 | 0,5 |

| cX | sans traitement | après traitement | différence |
|---|---|---|---|
| Tv | 79,1 | 80,0 | -0,9 |
| Re | 12,5 | 12,9 | -0,4 |
| Ri | 13,1 | 13,3 | -0,2 |
| TIR | 0,058 | 0,058 | 0 |
| R $\Omega/\square$ | 5,06 | 4,34 | 0,72 |

| cX | sans traitement | | | après traitement | | | $\Delta$E |
|---|---|---|---|---|---|---|---|
| | L* | a* | b* | L* | a* | b* | |
| T | 91,2 | -2,1 | 3,4 | 91,6 | -1,6 | 3,3 | 0,7 |
| Re | 42,2 | -1,9 | -6,5 | 42,9 | -2,2 | -6,7 | 0,8 |
| Ri | 43,2 | -2,8 | -7,3 | 43,6 | -2,6 | -7,8 | 0,7 |

**Revendications**

1. Vitrage essentiellement transparent comportant un système de couches minces déposées sous vide avec magnétron et présentant des propriétés antisolaires et/ou bas-émissives conférée notamment par au moins une couche réfléchissant les infrarouges à base d'argent, couche recouverte d'une couche barrière à base d'oxyde de titane déposée à partir de cibles céramiques et en atmosphère légèrement oxydante, comportant comme couche superficielle une couche à base d'oxyde de titane et d'au moins un autre oxyde métallique de dureté élevée du groupe comprenant : $ZrO_2$, $SiO_2$, $Cr_2O_3$, vitrage tel que soumis à un traitement thermique postérieur au dépôt du système de couches au moins à 550°C pendant 5 minutes, les caractéristiques colorimétriques de transmission lumineuse (Tv) de réflexion du coté de la couche (Re) et du coté du verre (Ri) sont telles que dans les coordonnées CIELAB pour 10°, les variations observées satisfont à la relation :

$$\Delta E \ = \ [(\Delta L^*)^2 + (\Delta a^*)^2 + (\Delta b^*)^2]^{1/2} \leq 2$$

pour chacune des transmission et réflexions,
et dans lequel la au moins une couche à base d'argent est disposée entre deux ensembles de couches diélectriques, et
est déposée sur une couche à base d'oxyde zinc, éventuellement dopée à l'étain, ou d'Al, ou de Ga.

2. Vitrage selon la revendication 1 dans lequel les variations observées pour la réflexion côté couche (Re) satisfont à la relation :

$$\Delta E \ = \ [(\Delta L^*)^2 + (\Delta a^*)^2 + (\Delta b^*)^2]^{1/2} \leq 1.$$

3. Vitrage selon la revendication 2 dans lequel les caractéristiques colorimétrique en réflexion du côté verre (Ri) comme celle en transmission satisfont à la même condition :

$$\Delta E \ = \ [(\Delta L^*)^2 + (\Delta a^*)^2 + (\Delta b^*)^2]^{1/2} \leq 1.$$

4. Vitrage selon l'une des revendications précédentes dans lequel l'oxyde de titane représente au moins 40% en poids de la couche superficielle.

5. Vitrage selon l'une des revendications précédentes dans lequel la couche superficielle contient encore des oxydes de lanthanides présents habituellement avec les oxydes additionnels considérés, ces oxydes se trouvant en proportion ne dépassant pas 5% en poids de l'ensemble des oxydes de la couche superficielle.

6. Vitrage selon l'une des revendications précédentes dans lequel, hors l'oxyde de titane, la couche superficielle contient de l'oxyde de zirconium à raison de 15 à 50% en poids.

7. Vitrage selon l'une des revendications précédentes dans lequel la couche superficielle à base d'oxyde de titane présente une épaisseur qui n'est pas inférieure à 3 nm.

8. Vitrage selon l'une des revendications 1 à 5 dans lequel la couche superficielle à base d'oxyde de titane présente une épaisseur qui n'est pas supérieure 35 nm.

9. Vitrage selon l'une des revendications précédentes dans lequel le ou les oxydes métalliques de la couche superficielle hors l'oxyde de titane, représentent au moins 5% en poids de l'ensemble de la couche, et de préférence au moins 10% en poids.

10. Vitrage selon la revendication 1 dans lequel la couche ou les couches barrière est (sont) à base d'oxyde mixte de titane et d'un oxyde de zirconium, niobium, aluminium, tantale.

11. Vitrage selon l'une des revendications précédentes, comprenant une, deux ou trois couches d'argent chacune d'une épaisseur de 7 à 20 nm.


**Patentansprüche**

1. Weitgehend transparente Verglasung, umfassend ein System von unter Vakuum mittels Magnetron abgeschiedenen dünnen Schichten mit insbesondere durch mindestens eine von einer aus keramischen Targets und unter leicht oxidierenden Bedingungen abgeschiedenen Barriereschicht auf Basis von Titanoxid bedeckte infrarotreflektierende Schicht auf Silberbasis verliehenen Sonnenschutz- und/oder Niedrigemissionseigenschaften, umfassend als Oberflächenschicht eine Schicht auf Basis von Titanoxid und mindestens einem anderen Metalloxid mit hoher Härte aus der Gruppe umfassend: $ZrO_2$, $SiO_2$, $Cr_2O_3$, wobei die Verglasung nach der Abscheidung des Schichtsystems einer Wärmebehandlung bei mindestens 550 °C über einen Zeitraum von 5 Minuten unterworfen wurde und die kolorimetrischen Eigenschaften der Lichttransmission (Tv) und der Reflexion der Schichtseite (Re) und der Glasseite (Ri) so beschaffen sind, dass in den CIELAB-Koordinaten für 10° die beobachteten Variationen jeweils für die Transmission und die Reflexionen die folgenden Beziehung erfüllen:

$$\Delta E \ = \ [(\Delta L^*)^2+(\Delta a^*)^2+(\Delta b^*)^2]^{1/2} \leq 2$$

und wobei die mindestens eine Schicht auf Silberbasis zwischen zwei Sätzen von dielektrischen Schichten angeordnet ist, und
auf einer Schicht auf Basis von gegebenenfalls mit Zinn oder Al oder Ga dotiertem Zinkoxid abgeschieden ist.

2. Verglasung nach Anspruch 1, wobei die für die schichtseitige Reflexion (Re) beobachteten Variationen die folgende Beziehung erfüllen:

$$\Delta E \ = \ [(\Delta L^*)^2+(\Delta a^*)^2+(\Delta b^*)^2]^{1/2} \leq 1.$$

3. Verglasung nach Anspruch 2, wobei die kolorimetrischen Eigenschaften der Reflexion der Glasseite (Ri) sowie der Transmission die gleiche Bedingung erfüllen:

$$\Delta E \ = \ [(\Delta L^*)^2+(\Delta a^*)^2+(\Delta b^*)^2]^{1/2} \leq 1.$$

4. Verglasung nach einem der vorhergehenden Ansprüche, wobei das Titanoxid mindestens 40 Gew.-% der Oberflächenschicht ausmacht.

**5.** Verglasung nach einem der vorhergehenden Ansprüche, wobei die Oberflächenschicht außerdem Lanthanidoxide enthält, die gewöhnlich mit den betrachteten zusätzlichen Oxiden vorliegen, wobei diese Oxide in einem Anteil von höchstens 5 Gew.-% aller Oxide der Oberflächenschicht vorliegen.

**6.** Verglasung nach einem der vorhergehenden Ansprüche, wobei die Oberflächenschicht neben dem Titanoxid Zirconiumoxid in einem Anteil von 15 bis 50 Gew.-% enthält.

**7.** Verglasung nach einem der vorhergehenden Ansprüche, wobei die Oberflächenschicht auf Basis von Titanoxid eine Dicke von nicht weniger als 3 nm aufweist.

**8.** Verglasung nach einem der Ansprüche 1 bis 5, wobei die Oberflächenschicht auf Basis von Titanoxid eine Dicke von nicht mehr als 35 nm aufweist.

**9.** Verglasung nach einem der vorhergehenden Ansprüche, wobei das Metalloxid bzw. die Metalloxide der Oberflächenschicht neben dem Titanoxid mindestens 5 Gew.-% und vorzugsweise mindestens 10 Gew.-% der gesamten Schicht ausmacht bzw. ausmachen.

**10.** Verglasung nach Anspruch 1, wobei die Barriereschicht bzw. die Barriereschichten auf einem Titanmischoxid und einem Zirconium-, Niob-, Aluminium- oder Tantaloxid basiert bzw. basieren.

**11.** Verglasung nach einem der vorhergehenden Ansprüche, umfassend eine, zwei oder drei Silberschichten, jeweils mit einer Dicke von 7 bis 20 nm.

## Claims

**1.** Essentially transparent glazing comprising a system of films deposited under vacuum by magnetron and having antisolar and/or low-emission properties imparted especially by at least one silver-based infrared-reflecting layer, said layer being covered with a titanium oxide-based barrier layer deposited from ceramic targets under a slightly oxidizing atmosphere, comprising as surface layer a layer based on titanium oxide and on at least one other metal oxide of high hardness from the group comprising: $ZrO_2$, $SiO_2$, $Cr_2O_3$, glazing as subjected to a heat treatment subsequent to the deposition of the layer system at least at 550°C for 5 minutes, the colorimetric characteristics of light transmission (Tv), of layer-side reflection (Re) and of glass-side reflection (Ri) are such that in the CIELAB coordinates for 10°, the variations observed satisfy the relationship:

$$\Delta E = [(\Delta L^*)^2 + (\Delta a^*)^2 + (\Delta b^*)^2]^{1/2} \leq 2$$

for each of the transmissions and reflections
and wherein the at least one layer based on silver is deposited between two sets of dielectric layers, and is deposited on a layer based on zinc oxide optionally doped with tin, or aluminium, or gallium.

**2.** Glazing according to Claim 1, in which the variations observed for the layer-side reflection (Re) satisfy the relationship:

$$\Delta E = [(\Delta L^*)^2 + (\Delta a^*)^2 + (\Delta b^*)^2]^{1/2} \leq 1.$$

**3.** Glazing according to Claim 2, in which the colorimetric characteristics of glass-side reflection (Ri) and that of transmission satisfy the same condition:

$$\Delta E = [(\Delta L^*)^2 + (\Delta a^*)^2 + (\Delta b^*)^2]^{1/2} \leq 1.$$

**4.** Glazing according to one of the preceding claims, in which the titanium oxide represents at least 40% by weight of the surface layer.

**5.** Glazing according to one of the preceding claims, in which the surface layer also contains lanthanide oxides usually present with the additional oxides under consideration, these oxides being in a proportion not exceeding 5% by weight of all of the oxides of the surface layer.

6. Glazing according to one of the preceding claims, in which, besides the titanium oxide, the surface layer contains zirconium oxide in a proportion of from 15% to 50% by weight.

7. Glazing according to one of the preceding claims, in which the surface layer based on titanium oxide has a thickness not less than 3 nm.

8. Glazing according to one of Claims 1 to 5, in which the surface layer based on titanium oxide has a thickness not greater than 35 nm.

9. Glazing according to one of the preceding claims, in which the metal oxide(s) of the surface layer, besides the titanium oxide, represent at least 5% by weight and preferably at least 10% by weight of the whole layer.

10. Glazing according to Claim 1, in which the barrier layer(s) are based on a mixed oxide of titanium and of a zirconium, niobium, aluminium or tantalum oxide.

11. Glazing according to one of the preceding claims, comprising one, two or three silver layers each with a thickness of 7 to 20 nm.

Fig. 1

Fig. 2

Fig. 3

## RÉFÉRENCES CITÉES DANS LA DESCRIPTION

**Documents brevets cités dans la description**

- US 20060046089 A
- WO 2006048462 A
- EP 0922681 A
- EP 1980539 A